# EUROPÄISCHE PATENTSCHRIFT

(11) **EP 0 705 659 B1**
(45) Veröffentlichungstag und Bekanntmachung des Hinweises auf die Patenterteilung: **12.01.2000**
(21) Anmeldenummer: 95115864.1
(22) Anmeldetag: 09.10.1995
(51) Int. Cl.: B23Q 3/00, B23C 3/12, B23Q 35/10

(54) **Bearbeitungseinheit zum Bearbeiter der Eckverbindungen von aus Profilstücken geschweissten Rahmen**
Machining unit for treatment of corner joints of frames of welded profiles
Unité d'usinage pour le traitement des joints d'angle de cadres en profilés soudés

(30) Priorität: 07.10.1994 DE 4435820
(43) Veröffentlichungstag der Anmeldung: 10.04.1996
(73) Patentinhaber: ROTOX GmbH B. EISENBACH, D-65611 Brechen (DE)
(72) Erfinder: Eisenbach, Bernd, D - 65611 Brechen (DE)
(74) Vertreter: Müller, Eckhard, Dr.

(56) Entgegenhaltungen:
- DE-A- 3 539 670
- DE-U- 8 907 514
- GB-A- 2 283 193

## Beschreibung

Die Erfindung bezieht sich auf eine Eckverputzvorrichtung zur Bearbeitung der Eckverbindungen von aus Profilstücken geschweißten Rahmen, insbesondere Fenster- oder Türrahmen, welche auf der nach innen gerichteten Seite eine Kurvenkontur aufweisen, mit einer Bearbeitungseinheit zur Abtragung der durch das Schweißen der Profilstücke an den Eckverbindungen entstandenen Schweißraupe, wobei die Bearbeitungseinheit ein Bearbeitungswerkzeug sowie zwei seitlich davon positionierte Taster umfaßt, in einer Richtung senkrecht zur Aufnahmeebene des Rahmens und entlang der Eckverbindung verschiebbar ist und mittels einer Federvorspannung gegen die Kurvenkontur des Rahmens gedrückt wird, wobei das Bearbeitungswerkzeug als Abstech- oder Abziehmesser mit V-förmig aufeinander zulaufenden Schneiden ausgebildet ist.

Eine Eckverputzvorrichtung mit den eingangs genannten Merkmalen ist beispielsweise aus der DE 35 39 670 A1 bekannt. Zum Abstechen des Schweißgrates an einer inneren, in der Rahmenebene liegenden Profilfläche eines Fenster- oder Türrahmens, der aus Profilstäben stumpfgeschweißt ist, ist ein Abstechmesser vorgesehen. Das Abstechmesser ist schwenkbar an einem längs verfahrbaren Schlitten gelagert und über eine Druckfeder abgestützt. Ein Anschlagkörper weist seitlich neben dem Abstechmesser angeordnete Taster auf, die zur Anlage an der zu bearbeitenden Profilfläche kommen und die Schwenkeinstellung des Abstechmessers vornehmen. Der Anschlagkörper ist längs verschiebbar am Messerhalter geführt und über eine Druckfeder am Schlitten abgestützt. Sobald der Anschlagkörper die Innenfläche des Profils berührt, bleibt der Anschlagkörper mit den Tasten stehen, während das Abstechmesser weiter vorgeschoben wird. Diese bekannte Vorrichtung erlaubt nur die Entfernung von Schweißraupen beziehungsweise Schweißgraten an solchen Profilflächen des Rahmens, die in der Rahmenebene und zwischen den äußeren Sichtflächen des Profils an der Innenseite eines Überschlages oder eines ähnlichen Profilabschnitts liegen.

Eine weitere Bearbeitungseinheit für Eckverputzvorrichtungen sind bspw. aus der DE 42 37 939 A1 bekannt.

In der Fensterbearbeitungstechnik kann es mitunter vorkommen, daß Fenster- oder Türrahmen mit einem Kurvenabschnitt auf der nach innen bzw. zur Scheibe hin gerichteten Seite des Fensters bearbeitet werden müssen. Die Abtragung der durch das Schweißen der Kunststoffprofilstücke an den Ecken entstehenden Schweißraupe kann dann nicht mehr mit den üblichen Abstech- oder Abziehmessern vorgenommen werden. Derzeit erfolgt die Bearbeitung der Rahmenecken in diesem Bereich, wenn überhaupt, von Hand, bspw. mittels eines Stemmeisens. Hierdurch ist eine nicht vertretbare Verlängerung der Taktzeit für die Bearbeitung der Rahmenecken gegeben.

Davon ausgehend liegt der Erfindung die Aufgabe zugrunde, eine Eckverputzvorrichtung mit einer Bearbeitungseinheit zur Bearbeitung des Innenecks von aus Profilstücken geschweißten Fenster- oder Türrahmen zur Verfügung zu stellen, mit welcher auch Profile mit einer Kurvenkontur am Inneneck in einfacher Weise rationell und sauber bearbeitet werden können. Zur Lösung der Aufgabe ist es nach der Erfindung vorgesehen, daß die Verlängerungen der Tastflanken der beiden Taster V-förmig aufeinander zulaufen und die Schneiden des Bearbeitungswerkzeuges einschließen.

Durch die Erfindung ist eine Eckverputzvorrichtung mit einer Bearbeitungseinheit zur Verfügung gestellt, mittels welcher auch Profile mit einer Kurvenkontur am Inneneck präzise und mit einer kurzen Taktfrequenz sowohl maschinell als auch manuell bearbeitet werden können. Durch die elastische Federvorspannung gleitet das wenigstens eine Tastelement entlang dem Kurvenabschnitt an der Rahmeninnenecke, wodurch das Bearbeitungswerkzeug längs der Gehrung der Kunststoffprofilstücke im Eckbereich geführt wird und die durch die Schweißung der Kunststoffprofilstücke entstandene Schweißraupe abträgt. Dadurch, daß die an dem Profil zur Anlage gelangenden vorderen Tastflanken in ihrer Verlängerung die zugeordneten Schneiden des Bearbeitungswerkzeuges einschließen, ist eine exakte Bearbeitung des Kurvenabschnitts am Rahmeninneneck gewährleistet.

Konstruktions- und montagetechnisch besonders günstig ist es, wenn die Taster an einem Tastelement mit U-förmigen Grundkörper, an seinen Schenkelenden gebildeten Tastflanken und zwischen den Schenkeln, vorzugsweise lösbar gehaltenem Bearbeitungswerkzeug ausgebildet sind. Hierdurch ist jeder Schneide des V-förmigen Bearbeitungswerkzeuges ein Tastelement zugeordnet, wobei die Tastflanken der Tastelemente jeweils in einer Geraden zu den Schneiden des Bearbeitungswerkzeuges liegen. Durch den U-förmigen Grundkörper mit zwischen den Schenkeln angeordnetem Bearbeitungswerkzeug ist eine kompakte Baueinheit geschaffen, so daß auch kleine Fensterrahmen problemlos bearbeitet werden können.

Im Falle, daß das Bearbeitungswerkzeug stumpf geworden ist und die Schneiden nachgeschliffen werden müssen, kann es sich ergeben, daß die Schneiden und die Tastflanken des Tastelementes nicht mehr in einer Geraden liegen. Hierfür ist es nach der Erfindung vorgehen, daß das Bearbeitungswerkzeug zur Ausrichtung seiner Schneiden mit den Tastflanken des Tastelementes einstellbar an diesem gehalten ist.

Konstruktions- und montagetechnisch besonders günstig ist es dabei, wenn das Bearbeitungswerkzeug längs der Schenkel des Grundkörpers des Tastelementes, vorzugsweise mittels einer Stellschraube verschiebbar ist.

Im Rahmen der Erfindung liegt es auch, daß das Bearbeitungswerkzeug mit dem Tastelement, vorzugsweise lösbar an einem Werkzeughalter gehalten ist, welcher in einem Gehäuse der Bearbeitungseinheit senkrecht zur Aufnahmeebene für das zu bearbeitende Profil verschiebbar geführt ist.

Dabei kann der Werkzeughalter mittels wenigstens einem Lager, insbesondere einem Kugellager innerhalb des Gehäuses der Bearbeitungseinheit verschiebbar sein, selbstverständlich sind aber auch andere Führungen, wie bspw. Schienen o. dgl. denkbar.

Die elastische Kraft, mittels welcher der Werkzeughalter bzw. das Bearbeitungswerkzeug mit dem wenigstens einen Tastelement an dem zu bearbeitenden Rahmeneck in Anlagestellung gehalten ist, kann nach einer vorteilhaften Ausgestaltung der Erfindung dadurch erzeugt werden, daß der Werkzeughalter mittels wenigstens einer sich an dem Gehäuse der Bearbeitungseinheit abstützenden, vorzugsweise einstellbaren Druckfeder in einer Hubstellung für die Anlage des Bearbeitungswerkzeuges bzw. des Tastelementes an dem zu bearbeitenden Profil gehalten ist. Die Einstellbarkeit der wenigstens einen Druckfeder empfiehlt sich insbesondere deshalb, um eine Höheneinstellung des Bearbeitungswerkzeuges mit Tastelementen zu ermöglichen.

Nach einer konstruktiven Ausgestaltung der Erfindung ist an dem der Aufnahme für das Bearbeitungswerkzeug gegenüberliegenden Ende des Werkzeughalters wenigstens ein durch eine Bohrung des Gehäuses gleitender Stehbolzen vorgesehen, an welchem die als Spiralfeder ausgebildete wenigstens eine Druckfeder gehalten ist.

Zum Ausgleich von sich beim Schweißvorgang ergebenden Toleranzen, bspw. einem Versatz der Profilstücke im Bereich der Gehrung, kann es sich nach der Erfindung empfehlen, daß das Bearbeitungswerkzeug mit dem wenigstens einen Tastelement schwimmend für eine zusätzliche seitliche Bewegung an dem Werkzeughalter bzw. der Bearbeitungseinheit gelagert ist. Im Falle eines Versatzes der Profilstücke im Bereich der Gehrung würde bei einer starren Anordnung von Bearbeitungswerkzeug und Tasteinrichtung nur ein Tastelement in Anlagestellung an dem Profil gelangen, während das andere Tastelement keinen Kontakt zum Werkstück hätte. Die Folge wäre, daß der Schweißgrat nur einseitig und damit unvollständig abgetragen würde. Durch die erfindungsgemäß vorgeschlagene zusätzliche seitliche Bewegungsmöglichkeit von Bearbeitungswerkzeug und Taster etwa parallel zur Ebene der Aufnahmeebene für die Fensterrahmen gelangen beide Tastelemente in Profilkontakt, wodurch eine vollständige Abtragung der Schweißraupe auch in solchen Fällen möglich ist.

Um eine selbsttätige Einstellung der Höhe des Werkzeuges an dem Rahmeneck bei Beginn der Bearbeitung zu erreichen, ist nach der Erfindung wenigstens ein ortsfest zum Bearbeitungswerkzeug bzw. dem wenigstens einen Tastelement angeordneter, vorzugsweise einstellbarer Höhentaster zur Anlage an einem Referenzpunkt am Profil, wie zum Beispiel auf der Oberseite bzw. der Sichtfläche des zu bearbeitenden Profils, vorgesehen. Die Einstellbarkeit des Höhentasters dient dabei einer Anpassung an unterschiedliche Profilquerschnitte bzw. Profildicken bzgl. des Beginns des Kurvenabschnitts am Rahmeninneneck.

Zum Ausgleich von Toleranzen beim Zusammenschweißen der Profilstücke, der Profilstücke selbst und auch bzgl. der Einspannung der Profilstücke an der Aufnahme der Bearbeitungsvorrichtung empfiehlt es sich nach der Erfindung zwei seitlich des Bearbeitungswerkzeuges an Schenkeln gehaltene Höhentaster vorzusehen.

Die Vorrichtung kann als eine maschinelle Eckverputzvorrichtung zur Bearbeitung des Innenecks von aus Profilstücken zusammengeschweißten Fenster- oder Türrahmen ausgebildet sein. Eine solche Eckverputzvorrichtung zeichnet sich durch eine universelle Einsetzbarkeit und geringe Taktfrequenz auch bei der Bearbeitung von mit Kurvenabschnitten an der Rahmeninnenecke aus.

Eine manuelle Eckverputzvorrichtung weist eine Aufnahme für den zu bearbeitenden Rahmen bzw. für das Rahmeneck und einen Hebelmechanismus zum Bewegen der Bearbeitungseinheit entlang der Gehrung der Rahmenecke auf, um das Abtragen der Schweißraupe durchzuführen.

Sowohl bei der manuellen als auch bei der maschinellen Bearbeitung ist es selbstverständlich auch möglich, die Bearbeitungsrichtung umzukehren mit einem Verfahren des Bearbeitungswerkzeuges von der Oberseite bzw. der Sichtfläche des Profils zur Innenecke hin.

Weitere Vorteile und Anwendungsmöglichkeiten der vorliegenden Erfindung ergeben sich aus der nachfolgenden Beschreibung von Ausführungsbeispielen anhand der Zeichnung.

Es zeigen:
- Figur 1: einen Längsschnitt einer möglichen Ausführungsform einer erfindungsgemäßen Bearbeitungseinheit,
- Figur 2: eine Schnittdarstellung der Bearbeitungseinheit gemäß Figur 1 um 90° gedreht,
- Figur 3: eine mögliche Ausführungsform eines erfindungsgemäßen Bearbeitungswerkzeuges mit Tastelement in einer Ausgangsstellung zur Bearbeitung der Eckverbindung eines Rahmens und
- Figur 4: eine perspektivische Darstellung der Bearbeitungseinheit in der Ausgangsstellung gemäß Figur 3.

Die Bearbeitungseinheit gemäß dem nachfolgend beschriebenen Ausführungsbeispiel dient zur Abtragung der durch das Schweißen der Kunststoffprofilstücke an den Eckverbindungen von Fenster- oder Türrahmen entstandenen Schweißraupe, und zwar solcher Fenster- oder Türrahmen, welche auf der nach der innen bzw. zur Scheibe hin gerichteten Seite des Rahmens ein Kurvenabschnitt 12 an der Innenecke aufweisen. Die Bearbeitungseinheit kann bspw. an einem Werkzeugträger einer Eckverputzvorrichtung angeordnet sein.

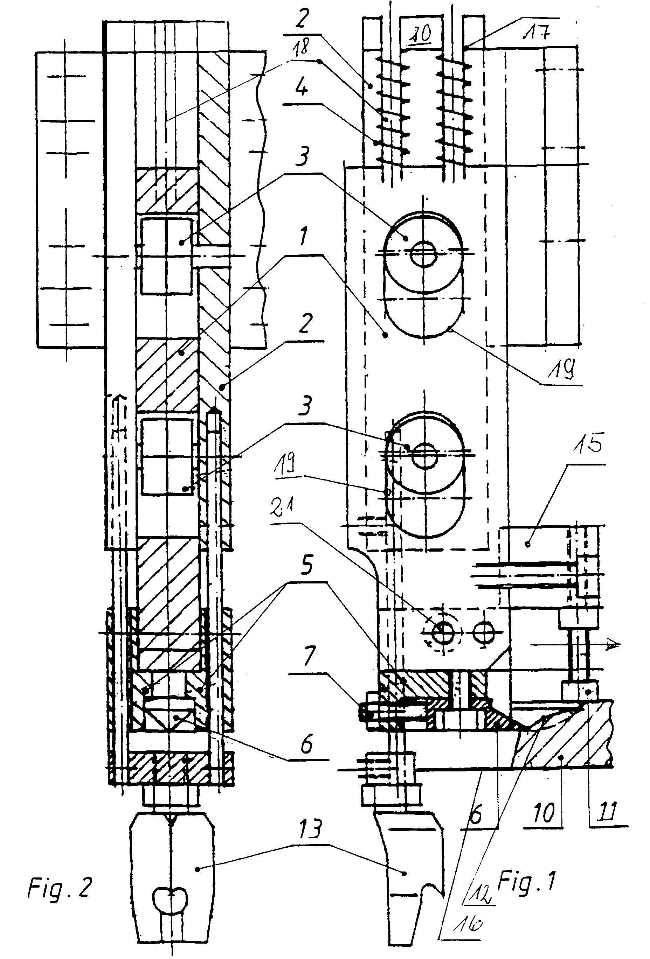

Gemäß den Figuren 1 und 2 weist die Bearbeitungseinheit einen in einem Gehäuse 2 in einer Richtung senkrecht zur Aufnahmeebene 16 für den zu bearbeitenden Fensterrahmen 10 verschiebbar geführten Werkzeughalter 1 auf, an dessen zur Aufnahme für das Profil 10 hin gerichteten Ende ein Bearbeitungswerkzeug 6, insbesondere ein Abstechmesser, gehalten ist. Von dem Rahmen 10 ist in den Figuren nur ein Teilstück dargestellt. Die Längsverschiebbarkeit des Werkzeughalters 1 innerhalb des Gehäuses 2 erfolgt bei dem hier gewählten Ausführungsbeispiel mittels Kugellagern 3, welche in Langlöchern 19 des Gehäuses 2 gleiten.

Der Werkzeughalter 1 bzw. das daran gehaltene Bearbeitungswerkzeug 6 ist mittels Druckfedern 4 gegen das zu bearbeitende Profil 10 gedrückt. Hierfür sind an dem der Aufnahme für das Bearbeitungswerkzeug 6 gegenüberliegenden Ende des Werkzeughalters 1 durch Bohrungen 17 des Gehäuses 2 gleitende Stehbolzen 18 vorgesehen, an welchen die als Spiralfedern ausgebildeten Druckfedern 4 gehalten sind. Wie insbesondere aus Figur 1 ersichtlich, sind die Druckfedern 4 zwischen einem Querbalken 20 des Gehäuses 2 und dem dem Bearbeitungswerkzeug 6 gegenüberliegenden Ende des Werkzeughalters 1 eingespannt, um eine elastische Kraft auf den Werkzeughalter 1 während der Bewegung des Bearbeitungswerkzeuges 6 entlang des Kurvenabschnittes 12 an der Gehrung 14 der zusammengeführten Profilstücke des Rahmens 10 zu bewirken.

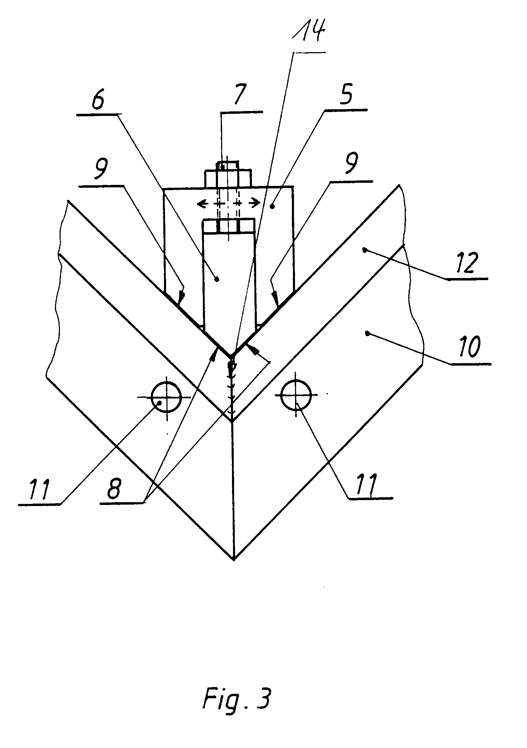

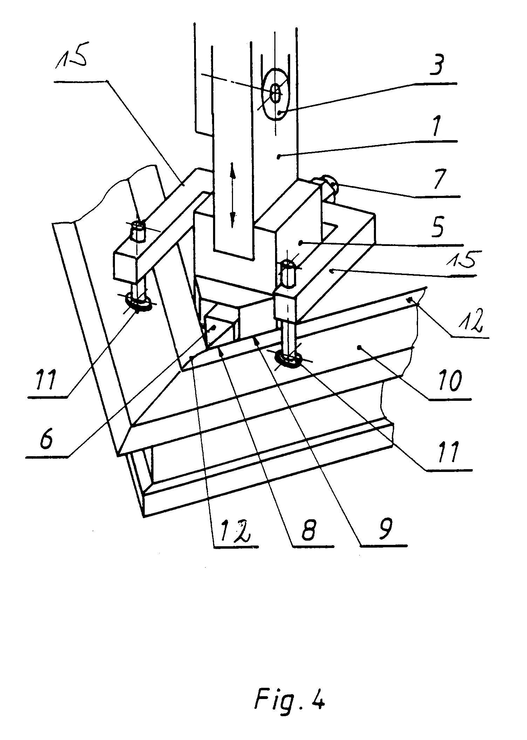

Das Bearbeitungswerkzeug 6 weist, wie insbesondere aus Figuren 3 und 4 ersichtlich, V-förmig, etwa im Winkel von 45° zur Gehrung aufeinander zulaufende Schneiden 8 auf.

Um das Bearbeitungswerkzeug 6 exakt entlang der Kurvenkontur 12 an dem Rahmeninneneck zu führen, ist ein Taster 5 vorgesehen, welcher im seitlichen Abstand zu der durch die Schweißung der Kunststoffprofilstücke entstandenen Schweißraupe die Kurvenkontur 12 des Rahmens 10 abfährt und das Bearbeitungswerkzeug 6 exakt im Gehrungsbereich entlang der Kurvenkontur 12 führt, so daß ein optisch ansprechender Rahmen auch in diesem Bereich erzeugt wird. Das Tastelement 5 weist einen etwa U-förmig ausgebildeten Grundkörper auf mit an seinen Schenkelenden gebildeten Tastflanken 9 und zwischen den Schenkeln lösbar gehaltenem Bearbeitungswerkzeug 6. Die Tastflanken 9 des Tastelementes 5 befinden sich in einer Geraden zu den zugeordneten Schneiden 8 des Bearbeitungswerkzeuges 6. Um diese Ausrichtung von Schneiden 8 und Tastflanken 9 sowohl bei der Erstmontage des Bearbeitungswerkzeuges 6 als auch nach einem Schärfen von stumpf gewordenen Schneiden 8 zu gewährleisten, ist das Bearbeitungswerkzeug 6 längs der Schenkel 15 des Tastelementes 5 mittels einer Einstellschraube 7 einstellbar. Das an dem Tastelement 5 gehaltene Bearbeitungswerkzeug 6 ist mittels einer Schraubverbindung 21 an dem Werkzeughalter 1 lösbar fixiert.

Um Toleranzen beim Schweißvorgang, bspw. einen Versatz der Profilstücke im Bereich der Gehrung, ausgleichen zu können, kann die Einheit aus Taster und Bearbeitungswerkzeug 6 für eine seitliche Bewegung, etwa parallel zur Aufspannebene 16 an dem Werkzeugträger 1 gelagert sein. Diese seitliche Beweglichkeit von Bearbeitungswerkzeug 6 mit Taster 5 ist in Figur 3 durch einen strichpunktierten Pfeil dargestellt. Durch diese schwimmende Lagerung mit seitlicher Bewegungsfreiheit gelangen beide Tastelemente 5 auch bei einem Versatz der Profilstücke im Gehrungsbereich in Profilkontakt, wodurch eine vollständige Abtragung der Schweißraupe auch in solchen Fällen ermöglicht ist.

Um eine selbsttätige Einstellung des Bearbeitungswerkzeuges 6 bzw. des Tastelementes 5 in der Ausgangsstellung gemäß Figur 1 an dem Profil 10 zu erreichen, sind ortsfest zum Bearbeitungswerkzeug 6 bzw. bei dem hier gewählten Ausführungsbeispiel ortsfest mit dem Werkzeughalter 1 verbundene einstellbare Höhentaster 11 vorgesehen, welche, wie aus den Figuren 1, 3 und 4 ersichtlich, an, mit dem Werkzeughalter 1 verbundenen Schenkeln 15 angeordnet sind. Die Höhentaster 11 gelangen bei dem hier gewählten Ausführungsbeispiel zur Auflage auf der Oberseite bzw. der Sichtfläche des zu bearbeitenden Profils 10. Selbstverständlich sind auch andere Referenzpunkte am Profil 10 für die Höhentaster 11 denkbar. Sie sind einstellbar, um die Höhendifferenz zwischen Anfangs- und Endpunkt des Kurvenabschnittes 12 für das jeweils zu bearbeitende Profil 10 im Hinblick auf den Ansatzpunkt des Bearbeitungswerkzeuges 6 und des Tastelementes 5 einstellen zu können. Insoweit ist es auch vorgesehen, daß der Werkzeughalter 1 in seiner Höhenlage, bspw. an den Stehbolzen 18 einstellbar ist.

Durch eine Einzugsbewegung der Bearbeitungseinheit in Pfeilrichtung gemäß Figur 1 bewegen sich die Tastflanken 9 des Tastelementes 5 diagonal zur Rahmenecke des zu bearbeitenden Profils 10 an der gewölbten Innenkontur 12 entlang und bringen das Bearbeitungswerkzeug 6 bzw. dessen Schneiden 8 in Eingriff mit der Rahmenecke zur Abtragung der Schweißraupe.

Durch die erfindungsgemäße Vorrichtung kann praktisch jeder beliebiger Kontur, auch bspw. eine solche, welche entsprechend der strichpunktierten Linie gemäß Figur 1 konkav ausgebildet ist, an der Innenecke eines Profils 10 bearbeitet werden. Einer zusätzlichen Einstellung des Bearbeitungswerkzeuges 6 bedarf es nicht mehr.

Die Einzugsbewegung der Bearbeitungseinheit kann auf unterschiedliche Art und Weise erfolgen, bspw. mittels Einzugszylindern, Spindeln o. dgl. Antriebsmitteln. Auch ist eine manuell mittels eines Hebelmechanismuses betätigbare Eckenverputzvorrichtung mit einer solchen Bearbeitungseinheit ausrüstbar. Diese handbetätigte Eckenverputzvorrichtung weist bspw. eine Aufnahme für das zu bearbeitende Rahmeneck auf mit Spannmitteln zum Anpressen des Rahmenecks gegen die Aufnahme. Mittels des Hebelmechanismuses wird dann die Bearbeitungseinheit längs des Kurvenabschnittes geführt.

Bei der Darstellung gemäß Figuren 1 und 2 ist an dem Werkzeughalter 1 zusätzlich ein Abstechmesser 13 zur Bearbeitung der Innenflanke des Rahmenecks vorgesehen.

## Patentansprüche

1. Eckverputzvorrichtung zur Bearbeitung der Eckverbindungen von aus Profilstücken geschweißten Rahmen, insbesondere Fenster- oder Türrahmen (10), welche auf der nach innen gerichteten Seite eine Kurvenkontur (12) aufweisen, mit einer Bearbeitungseinheit zur Abtragung der durch das Schweißen der Profilstücke an den Eckverbindungen entstandenen Schweißraupe, wobei die Bearbeitungseinheit ein Bearbeitungswerkzeug (6) sowie zwei seitlich davon positionierte Taster umfaßt, in einer Richtung senkrecht zur Aufnahmeebene (16) des Rahmens und entlang der Eckverbindung verschiebbar ist und mittels einer Federvorspannung gegen die Kurvenkontur (12) des Rahmens gedrückt wird, wobei das Bearbeitungswerkzeug als Abstech- oder Abziehmesser mit V-förmig aufeinander zulaufenden Schneiden (8) ausgebildet, dadurch gekennzeichnet, daß die Verlängerungen der Tastflanken (9) der beiden Taster V-förmig aufeinander zulaufen und die Schneiden (8) des Bearbeitungswerkzeuges (6) einschließen.

2. Eckverputzvorrichtung nach Anspruch 1, dadurch gekennzeichnet, daß die Taster an einem Tastelement (5) mit U-förmigem Grundkörper, an seinen Schenkelenden gebildeten Tastflanken (9) und zwischen den Schenkeln (15), vorzugsweise lösbar gehaltenem Bearbeitungswerkzeug (6) ausgebildet sind.

3. Eckverputzvorrichtung nach Anspruch 1 oder 2, dadurch gekennzeichnet, daß das Bearbeitungswerkzeug (6) zur Ausrichtung seiner Schneiden (8) mit den Tastflanken (9) des Tastelementes (5) einstellbar an dem Tastelement (5) gehalten ist.

4. Eckverputzvorrichtung nach Anspruch 2 oder 3, dadurch gekennzeichnet, daß das Bearbeitungswerkzeug (6) längs der Schenkel des Tastelementes (5), vorzugsweise mittels einer Stellschraube (7) verschiebbar ist.

5. Eckverputzvorrichtung nach einem der vorhergehenden Ansprüche, dadurch gekennzeichnet, daß das Bearbeitungswerkzeug (6) mit dem Tastelement (5) für eine bezüglich der Eckverbindung seitliche Ausgleichsbewegung an der Bearbeitungseinheit gehalten ist.

6. Eckverputzvorrichtung nach einem der Ansprüche 2 bis 5, dadurch gekennzeichnet, daß das Bearbeitungswerkzeug (6) mit dem Tastelement (5), vorzugsweise lösbar an einem Werkzeughalter (1) gehalten ist, welcher in einem Gehäuse (2) der Bearbeitungseinheit verschiebbar geführt ist.

7. Eckverputzvorrichtung nach Anspruch 6, dadurch gekennzeichnet, daß der Werkzeughalter (1) mittels wenigstens einem Lager, insbesondere einem Kugellager (3), innerhalb des Gehäuses (2) der Bearbeitungseinheit verschiebbar ist.

8. Eckverputzvorrichtung nach Anspruch 6 oder 7, dadurch gekennzeichnet, daß der Werkzeughalter (1) mittels wenigstens einer sich an dem Gehäuse (2) der Bearbeitungseinheit abstützenden, vorzugsweise einstellbaren Druckfeder (4) in einer Hubstellung für die Anlage des Bearbeitungswerkzeuges (6) bzw. des Tastelementes (5) an dem zu bearbeitenden Profil (10) gehalten ist.

9. Eckverputzvorrichtung nach einem der Ansprüche 6 bis 8, dadurch gekennzeichnet, daß an dem der Aufnahme für das Bearbeitungswerkzeug (6) gegenüberliegenden Ende des Werkzeughalters (1) wenigstens ein durch eine Bohrung (17) des Gehäuses (2) gleitender Stehbolzen (18) vorgesehen ist, an welchem die als Spiralfeder ausgebildete Druckfeder (4) gehalten ist.

10. Eckverputzvorrichtung nach einem der vorhergehenden Ansprüche, dadurch gekennzeichnet, daß zur Einstellung der Höhe des Bearbeitungswerkzeuges (6) bzw. des Tastelementes (5) wenigstens ein ortsfest zum Bearbeitungswerkzeug (6) angeordneter, vorzugsweise einstellbarer Höhentaster (11) zur Anlage an einem Referenzpunkt des zu bearbeitenden Profils (10) vorgesehen ist.

11. Eckverputzvorrichtung nach Anspruch 10, dadurch gekennzeichnet, daß zwei seitlich des Bearbeitungswerkzeuges (6) an Schenkeln (15) gehaltene Höhentaster (11) vorgesehen sind.

## Claims

1. Corner-trimming device for the treatment of the corner connections of frames welded together from profile members, in particular window or door frames (10), which have a curved outline on the inwardly directed side, with a treatment unit for the removal of the weld bead that has arisen at the corner connections due to the welding of the profile members, wherein the treatment unit comprises a treatment tool (6) as well as two feelers positioned laterally thereof, is displaceable in a direction perpendicular to the receiving plane (16) of the frame and is displaceable along the corner connection and urged by means of a spring bias against the curved outline (12) of the frame, wherein the treatment tool (6) is constructed as severing or smoothing blade with cutting edges (8) converging in V-shape, characterised in that the prolongations of the feeler flanks (9) of both the feelers converge in V-shape and include the cutting edges (8) of the treatment tool (6).

2. Corner-trimming device according to claim 1, characterised in that the feelers at a feeler element (5) are constructed with a U-shaped base body, feeler flanks (9) formed at its limb ends and a treatment tool (6) retained between the limbs (15), preferably to be detachable.

3. Corner-trimming device according to claim 1 or 2, characterised in that the treatment tool (6) is retained at the feeler element (5) to be settable for alignment of its cutting edges (8) with the feeler flanks (9) of the feeler element (5).

4. Corner-trimming device according to claim 2 or 3, characterised in that the treatment tool (6) is displaceable along the limbs of the feeler element (5), preferably by means of a setscrew (7).

5. Corner-trimming device according to one of the preceding claims, characterised in that the treatment tool (6) with the feeler element (5) is retained at the treatment unit for a lateral equalising movement with respect to the corner connection.

6. Corner-trimming device according to one of claims 2 to 6, characterised in that the treatment tool (6) with the feeler element (5) is retained, preferably to be detachable, at a tool holder (1), which is guided to be displaceable within a housing (2) of the treatment unit.

7. Corner-trimming device according to claim 6, characterised in that the tool holder (1) is displaceable within the housing (2) of the treatment unit by means of at least one bearing, in particular a ball bearing (3).

8. Corner-trimming device according to claim 6 or 7, characterised in that the tool holder (1) is retained by at least one compression spring (4), which is preferably adjustable and bears against the housing (2) of the treatment unit, in a stroke setting for the bearing of either the treatment tool (6) or the feeler element (5) against the profile (10) to be treated.

9. Corner-trimming device according to one of claims 6 to 8, characterised in that at least one stud (18), which slides through a bore (17) of the housing (2) and at which the compression spring (4) constructed as helical spring is retained, is provided at that end of the tool holder (1), which lies opposite the receptacle for the treatment tool (6).

10. Corner-trimming device according to one of the preceding claims, characterised in that at least one height feeler (11), which is arranged in fixed location relative to the treatment tool (6) and preferably adjustable, for bearing against a reference point of the profile (10) to be treated, is provided for the setting of the height of the treatment tool (6) or the feeler element (5).

11. Corner-trimming device according to claim 10, characterised in that two height feelers (11) are provided and retained laterally of the treatment tool (6) at limbs (15).

## Revendications

1. Dispositif d'ébavurage d'angle pour le traitement des assemblages d'angle de châssis soudés à partir de pièces profilées, notamment de châssis de fenêtre ou de porte (10), qui comportent un contour courbe (12) sur la face dirigée vers l'intérieur, comprenant une unité d'usinage servant à ôter le cordon de soudure se présentant sur les assemblages d'angle du fait du soudage des pièces profilées, l'unité d'usinage comportant un outil d'usinage (6) et deux palpeurs positionnés latéralement par rapport à celui-ci, étant déplaçable suivant une direction perpendiculaire au plan de réception (16) du châssis et le long de l'assemblage d'angle et étant appliquée au moyen d'une précontrainte élastique en appui sur le contour courbe (12) du châssis, tandis que l'outil d'usinage est réalisé sous forme d'une lame de coupe ou lame à rectifier comportant des parties de taille (8) s'étendant en V l'une par rapport à l'autre, caractérisé en ce que les prolongements des flancs de palpage (9) des deux palpeurs s'étendent en V l'un vers l'autre et contiennent les parties de taille (8) de l'outil d'usinage (6).

2. Dispositif d'ébavurage d'angle suivant la revendication 1, caractérisé en ce que les palpeurs sont réalisés sur un élément de palpage (5) comportant un corps de base en U, des flancs de palpage (9) formés sur les extrémités de ses branches et un outil d'usinage (6) monté, de préférence d'une manière amovible, entre les branches (15).

3. Dispositif d'ébavurage d'angle suivant la revendication 1 ou 2, caractérisé en ce que l'outil d'usinage (6) est maintenu sur l'élément de palpage (5) d'une manière réglable en vue de l'alignement de ses parties de taille (8) avec les flancs de palpage (9) de l'élément de palpage (5).

4. Dispositif d'ébavurage d'angle suivant la revendication 2 ou 3, caractérisé en ce que l'outil d'usinage (6) est mobile le long des branches de l'élément de palpage (5), de préférence au moyen d'une vis de réglage (7).

5. Dispositif d'ébavurage d'angle suivant l'une des revendications précédentes, caractérisé en ce que l'outil d'usinage (6) comportant l'élément de palpage (5) est maintenu sur l'unité d'usinage de façon à pouvoir être soumis à un déplacement de compensation transversalement par rapport à l'assemblage d'angle.

6. Dispositif d'ébavurage suivant l'une des revendications 2 à 6, caractérisé en ce que l'outil d'usinage (6) comportant l'élément de palpage (5) est maintenu, de préférence d'une manière amovible, sur un porte-outil (1) qui est guidé d'une manière coulissante dans un boîtier (2) de l'unité d'usinage.

7. Dispositif d'ébavurage d'angle suivant la revendication 6, caractérisé en ce que le porte-outil (1) est mobile à l'intérieur du boîtier (2) de l'unité d'usinage au moyen d'au moins un roulement, notamment d'un roulement à billes (3).

8. Dispositif d'ébavurage d'angle suivant la revendication 6 ou 7, caractérisé en ce que le porte-outil (1) est maintenu, au moyen d'au coins un ressort de compression (4) prenant appui sur le boîtier (2) de l'unité d'usinage et de préférence réglable, dans une position de poussée servant à l'appui de l'outil d'usinage (6) ou de l'élément de palpage (5) sur le profilé (10) à usiner.

9. Dispositif d'ébavurage d'angle suivant l'une des revendications 6 à 8, caractérisé en ce que, sur l'extrémité du porte-outil (1) située à l'opposé de l'élément de réception prévu pour l'outil d'usinage (6), il est prévu au moins un tirant (18) qui coulisse dans un alésage (17) du boîtier (2) et sur lequel est maintenu le ressort de compression (4) constitué d'un ressort hélicoïdal.

10. Dispositif d'ébavurage d'angle suivant l'une des revendications précédentes, caractérisé en ce que, pour régler la hauteur de l'outil d'usinage (6) ou de l'élément de palpage (5), il est prévu au moins un palpeur de hauteur (11), de préférence réglable, qui est disposé à demeure par rapport à l'outil d'usinage (6) et qui est destiné à venir en appui sur un point de référence du profilé (10) à usiner.

11. Dispositif d'ébavurage d'angle suivant la revendication 10, caractérisé en ce qu'il est prévu deux palpeurs de hauteur (11) maintenus sur les branches (15) transversalement par rapport à l'outil d'usinage (6).
